# EUROPEAN PATENT APPLICATION

(11) **EP 4 379 944 A1**
(43) Date of publication of application: **05.06.2024**
(21) Application number: 22848543.9
(22) Date of filing: 26.07.2022
(51) Int. Cl.: H01M 50/503, H01M 50/507, H01M 50/588, H01M 50/593

(54) **BATTERY MODULE BUSBAR, BATTERY MODULE AND BATTERY PACK**

(30) Priority: 30.07.2021 CN 202121774812 U
(71) Applicant: SVOLT ENERGY TECHNOLOGY CO., LTD, Changzhou, Jiangsu 213200 (CN)
(72) Inventor: GE, Youwei, hangzhou, Jiangsu 213200 (CN); ZHANG, Qiaoran, hangzhou, Jiangsu 213200 (CN); LI, Zhengzhe, hangzhou, Jiangsu 213200 (CN)
(74) Representative: dompatent von Kreisler Selting Werner - Partnerschaft von Patent- und Rechtsanwälten mbB
(86) International application number: PCT/CN2022/108016
(87) International publication number: WO 2023/005938

(57) **Abstract**

This application relates to a battery module busbar, a battery module and a battery pack, wherein the battery module comprises a U-shaped end plate above a bottom wall of which water conduits are arranged. The battery module busbar comprises an upper casing, a busbar body and a lower casing which are arranged successively from top to bottom. The busbar body comprises a U-shaped segment opening towards the water conduits and extension segments formed by bending outside from side plate faces of the U-shaped segment, said extension segments are used for connecting with cell poles. The upper casing and the lower casing are both configured into a U-shape so as to fit with the U-shaped segment of the busbar body. A gap is provided between the upper casing and the water conduits, and side plate faces of the lower casing are fitted with side walls of the end plate. By doing so, it is possible to ensure that no relative movement and thus no wear will be occurred between the busbar and the end plate during vibration, and friction is also avoided by the certain gap between the water conduits and the busbar. The above arrangement is able to achieve electrical isolation of the busbar between modules inside a limited arrangement space.

## Description

### CROSS-REFERENCE TO RELATED APPLICATION

This application claims priority to Chinese patent application No. 202121774812.3 filed on July 30, 2021 entitled "Battery Module Busbar, Battery Module and Battery Pack", the disclosure of which is hereby incorporated by reference in its entirety.

### TECHNICAL FIELD

The present disclosure relates to the field of battery technology, in specifically to a battery module busbar, a battery module and a battery pack.

### BACKGROUND

A battery module sampling assembly is generally constituted by plastic isolation plate, FPC and busbar etc. The busbar serves as a connecting bridge between one battery cell and another so as to play a role of electric current transmission. The busbar is necessary to be electrically insulated from the surrounding non-conductive metallic parts to avoid the safety risks such as short circuit etc.

In related arts, a sufficiently large gap is pre-set between the busbar and the non-conductive metallic parts or a plastic support is provided to separate them from each other in order to ensure that there is no contact between the busbar and the non-conductive metallic parts. Presently, since arrangement space of the module sampling assembly and thus the distance between the busbar and the non-conductive metallic parts becomes more and more smaller, it is hard to achieve electrical insulation by only pre-setting the gap or separating by means of the plastic support. In addition, there are solutions which sheathing the surface of the busbar with a heat shrink tube, which heat shrink tube however has a relatively poor wear resistance and thus more susceptible to scratches and causing insulation failure as a result, and also the heat shrink tube will rub against the metallic parts in case of the smaller gap and thus causing wear of the heat shrink tube.

### SUMMARY

A first object of the present disclosure is to provide a battery module busbar which is possible to achieve electrical isolation of the busbar between modules inside a limited arrangement space.

A second object of the present disclosure is to provide a battery module which adopts the battery module busbar provided by the present disclosure.

A third object of the present disclosure is to provide a battery pack which comprises the battery module provided by the present disclosure.

To achieve the above objects, the present disclosure provides a battery module busbar in which the battery module has a U-shaped end plate and above a bottom wall of which water conduits are arranged. The battery module busbar comprises an upper casing, a busbar body and a lower casing which are arranged successively from top to bottom, wherein the busbar body comprises a U-shaped segment opening towards the water conduits and extension segments formed by bending outside from side plate faces of the U-shaped segment, said extension segments are used for connecting with cell poles. The upper casing and the lower casing are both configured into a U-shape so as to fit with the U-shaped segment of the busbar body. A gap is provided between the upper casing and the water conduits, and side plate faces of the lower casing are fitted with side walls of the end plate.

Optionally, the extension segments each comprises a horizontal segment and a transition segment which connects the horizontal segment and the U-shaped segment, and the cell poles are welded to the horizontal segment.

Optionally, side walls of the upper casing and the lower casing are bending outside to form bending segments which fit with the transition segments.

Optionally, the upper casing and the lower casing are fixedly connected by snap-fit so as to enclose the U-shaped segment therebetween.

Optionally, an end portion of each of the extension segments which is far away from the U-shaped segment has a recess formed thereon for placing a nickel sheet.

Optionally, it is provided on outer walls of the side plate faces of the lower casing along a length direction of each of the side plate faces a plurality of spaced apart ribs which extend along their height direction, said ribs each has a cross section which tapering from top to bottom.

Optionally, the upper casing and the lower casing are both made of a material of polylaurylamide, and the busbar body is made of a material of aluminum.

Optionally, a distance between the upper casing and the water conduits is 3 to 5mm.

According to a second aspect of the present disclosure, it is also provided a battery module which comprises an end plate and a busbar arranged on the end plate for connecting with cell poles, said busbar is the above mentioned battery module busbar.

According to a third aspect of the present disclosure, it is also provided a battery pack which comprises the above mentioned battery module.

With the above solutions, an electrical insulation effect is achieved by the upper casing and the lower casing enclose therebetween the busbar body for connecting with cell poles, and use of the space between the end plate and the water conduits can be maximized thanks to the design of the shape of the busbar in which the side plate faces of the lower casing are fitted with the side walls of the end plate, so as to ensure that no relative movement and thus no wear will be occurred between the busbar and the end plate during vibration, and friction is also avoided by the certain gap between the upper casing and the water conduits. The above arrangement is able to achieve electrical insulated isolation of the busbar between modules inside a limited arrangement space.

Other features and advantages of the present disclosure will be described in more detail in the following "detailed description of embodiments" part.

### BRIEF DESCRIPTION OF THE DRAWINGS

The accompanying drawings are provided for a further understanding of the present disclosure and constitute an integral part of the description, which, together with the following specific embodiments, are intended to explain the present disclosure without limiting its scope, in which:
Fig. 1 is a schematic structure view of a battery module busbar provided by an exemplary embodiment of the present disclosure;
Fig. 2 is a schematic exploded view of a battery module busbar provided by the exemplary embodiment of the present disclosure; and
Fig. 3 is a schematic partial view of a battery module provided by the exemplary embodiment of the present disclosure.

### List of reference numerals

1: end plate; 2: water conduits;
3: busbar body; 31: U-shaped segment;
32: extension segments; 321: horizontal segments;
322: transition segments; 323: recesses;
4: upper casing; 5: lower casing;
51: ribs.

### DETAILED DESCRIPTION OF EMBODIMENTS

Specific embodiments of the present disclosure will be described in details below in conjunction with the accompanying drawings. It should be understood that the specific embodiments described herein are provided for illustrating and explaining the present disclosure only and are not intended to limit its scope.

The directional terms used herein such as "upper", "lower", "front" and "back" are with respect to the actual installation status of corresponding components unless stated to the contrary. The terms "inside" and "outside" indicate the inside and outside of the contours of the corresponding components. Same reference numerals in different drawings indicate same or similar elements when the following description is related to the drawings, unless stated otherwise.

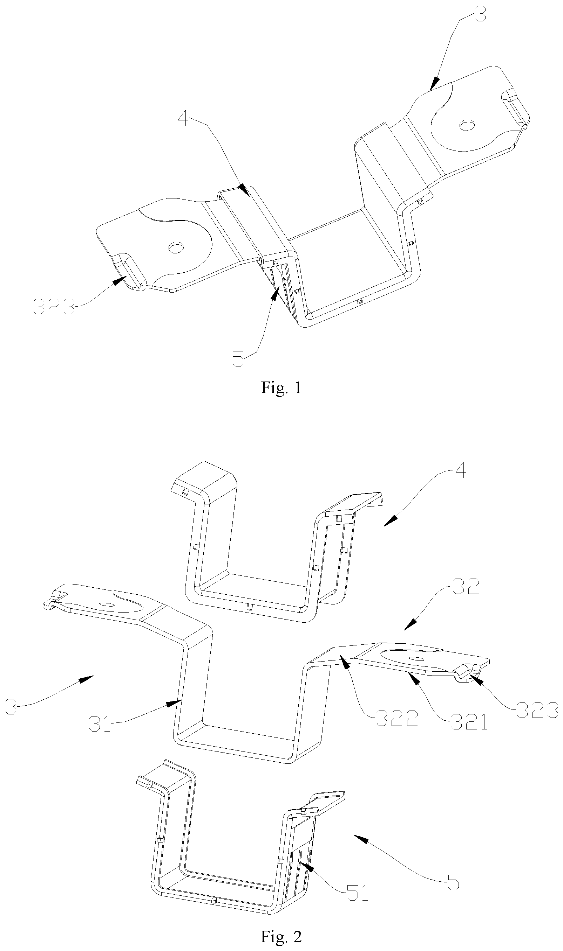

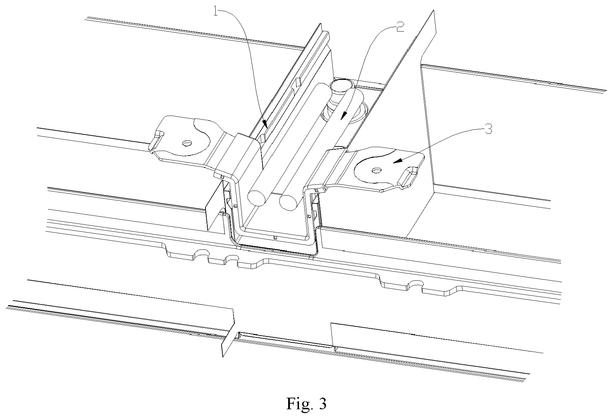

With reference to Figs. 1 to 3, the present disclosure provides a battery module busbar. As shown in Fig. 3, the battery module has a U-shaped end plate 1, above a bottom wall of which water conduits 2 or other non-conductive metallic parts are arranged. The battery module busbar comprises an upper casing 4, a busbar body 3 and a lower casing 5 which are arranged successively from top to bottom, wherein the busbar body 3 comprises a U-shaped segment 31 opening towards the water conduits 2 and extension segments 32 formed by bending outside from side plate faces of the U-shaped segment 31, said extension segments 32 are used for connecting with cell poles. The upper casing 4 and the lower casings 5 are each configured into a U-shape so as to fit with the U-shaped segment 31 of the busbar body 3. A gap is provided between the upper casing 4 and the water conduits 2, and side plate faces of the lower casing 5 are fitted with side walls of the end plate 1.

With the above technical solution, an electrical insulation effect is achieved by the upper casing 4 and the lower casing 5 enclose therebetween the busbar body 3 for connecting with cell poles, and use of the space between the end plate 1 and the water conduits 2 can be maximized thanks to the design of the shape of the busbar in which the side plate faces of the lower casing 5 are fitted with the side walls of the end plate 1, so as to ensure that no relative movement and thus no wear will be occurred between the busbar and the end plate 1 during vibration, and friction is also avoided by the certain gap between the upper casing 4 and the water conduits 2. The above arrangement is able to achieve electrical insulated isolation of the busbar between modules inside a limited arrangement space.

According to an embodiment of the present disclosure, as shown in Fig. 2, the extension segments 32 may comprise a horizontal segment 321 and a transition segment 322 which connects the horizontal segment 321 and the U-shaped segment 31, wherein the transition segment 322 may have an inclined arrangement and the cell poles may be connected to the horizontal segment 321 by means of laser welding process.

In an embodiment of the present disclosure, as shown in Fig. 1, side walls of the upper casing 4 and the lower casing 5 are bending outside to form bending segments which fit with the transition segments 322 and arranging above side walls of the end plate 1 such that an insulation protection of the transition segments 322 can be achieved by means of the bending segments.

With reference to Fig. 1, the upper casing 4 and the lower casing 5 are fixedly connected by snap-fit so as to enclose the U-shaped segment 31 therebetween. Specifically, as shown in Fig. 2, one of the upper casing 4 and the lower casing 5 is provided with a plurality of spaced apart slots on both of its front and back ends, and front and back ends of the other are provided with a plurality of projections mating with the respectively slots.

Optionally, with reference to Figs. 1 and 2, an end portion of each of the extension segments 32 which is far away from the U-shaped segment 31 has a recess 323 formed thereon for placing a nickel sheet in the recess 323, so as to conduct voltage temperature sampling. The nickel sheet may be welded inside the recess 323 such that it does not interfere with an upper cover of the battery module and save space. Specifically, a depth of the recess 323 is optionally 0.3mm.

According to some examples and with reference to Fig. 2, it is provided on outer walls of the side plate faces of the lower casing 5 along a length direction of each of the side plate faces a plurality of spaced apart ribs 51 which extend along their height directions, and said ribs 51 each has a cross section which tapering from top to bottom to guide the mounting of the busbar so as to facilitate the assembly of the busbar on the battery module, as well as making the connection of the lower casing 5 and the end plate 1 more tight.

Specifically, the upper casing 4 and the lower casing 5 may both made of a material of polylaurylamide which has good insulating property, wear resistance and toughness, and the material of the busbar body 3 may be aluminum. Note that the materials of busbar body 3, upper casing 4 and lower casing 5 may be arbitrarily selected as required and all of them are within the scope of the present disclosure.

Optionally, a distance between the upper casing 4 and the water conduits 2 is 3 to 5mm, and which in the embodiment of the present disclosure is 4.6mm.

According to a second aspect of the present disclosure, a battery module is also provided which comprises an end plate 1 and a busbar arranged on the end plate 1 for connecting with cell poles. Said busbar is the battery module busbar provided by the present disclosure, which has the same advantages as the above mentioned battery module busbar relative to the prior arts, so details thereof are not repeated hereafter.

According to a third aspect of the present disclosure, it is further provided a battery pack which comprises the battery module provided by the present disclosure. The battery pack has the same advantages as the above mentioned battery module busbar and the battery module relative to the prior arts, so details thereof are not repeated hereafter.

The optional embodiments are described above in conjunction with the accompanying drawings, but the present disclosure is not limited by the specific details thereof. Several simple modifications may be made to the technical solution of the present disclosure within its concept, and such modifications are considered within the scope of the present disclosure.

It should also be noted that respectively specific technical features described in the above specific embodiments may be combined in any suitable manner without conflict. In order to avoid unnecessary repetition, various possible combinations will not be described further.

Moreover, any combination of various embodiments of the present disclosure may be carried out without departing from its spirit, and such combination should also be considered within the scope of the present disclosure.

## Claims

1. A battery module busbar comprising a U-shaped end plate (1) above a bottom wall of which water conduits (2) are arranged, **characterized in that** the battery module busbar comprises an upper casing (4), a busbar body (3) and a lower casing (5) which are arranged successively from top to bottom, wherein the busbar body (3) comprises a U-shaped segment (31) opening towards the water conduits (2) and extension segments (32) formed by bending outside from side plate faces of the U-shaped segment (31), said extension segments (32) are used for connecting with cell poles, the upper casing (4) and the lower casing (5) are both configured into a U-shape so as to fit respectively with the U-shaped segment (31) of the busbar body (3), a gap is provided between the upper casing (4) and the water conduits (2), and side plate faces of the lower casing (5) are fitted with side walls of the end plate (1).

2. The method according to claim 1, **characterized in that** the extension segments (32) each comprises a horizontal segment (321) and a transition segment (322) which connects the horizontal segment (321) and the U-shaped segment (31), and the cell poles are welded to the horizontal segment (321).

3. The method according to claim 2, **characterized in that** side walls of the upper casing (4) and the lower casing (5) are bending outside to form bending segments which fit with the transition segments (322).

4. The method according to claim 1, **characterized in that** the upper casing (4) and the lower casing (5) are fixedly connected by snap-fit so as to enclose the U-shaped segment (31) therebetween.

5. The method according to claim 1, **characterized in that** an end portion of each of the extension segments (32) which is far away from the U-shaped segment (31) has a recess (323) formed thereon for placing a nickel sheet.

6. The method according to claim 1, **characterized in that** it is provided on outer walls of the side plate faces of the lower casing (5) along a length direction of each of the side plate faces a plurality of spaced apart ribs (51) which extend along their height directions, said ribs (51) each has a cross section which tapering from top to bottom.

7. The method according to claim 1, **characterized in that** the upper casing (4) and the lower casing (5) are both made of a material of polylaurylamide, and the busbar body (3) is made of a material of aluminum.

8. The method according to claim 1, **characterized in that** a distance between the upper casing (4) and the water conduits (2) is 3 to 5mm.

9. A battery module **characterized by** comprising an end plate (1) and a busbar arranged on the end plate (1) for connecting with cell poles, wherein said busbar is the battery module busbar according to any one of the claims 1 to 8.

10. A battery pack **characterized by** comprising the battery module according to claim 9.
